Europäisches Patentamt

European Patent Office

Office européen des brevets

(11) Publication number: **0 152 205**
A2

(12) # EUROPEAN PATENT APPLICATION

(21) Application number: **85300495.0**

(22) Date of filing: **24.01.85**

(51) Int. Cl.⁴: **F 16 C 17/14**

(30) Priority: **09.02.84 GB 8403413**

(43) Date of publication of application:
**21.08.85 Bulletin 85/34**

(84) Designated Contracting States:
**CH DE FR GB IT LI SE**

(71) Applicant: **BTR plc**
**Silvertown House Vincent Square**
**London SW1P 2PL(GB)**

(72) Inventor: **Cox, Michael James**
**72, Green Lane**
**Tutbury Staffs. DE13 9NN(GB)**

(74) Representative: **Waite, Anthony William et al,**
**Marks & Clerk Alpha Tower Suffolk Street Queensway**
**Birmingham B1 1TT(GB)**

(54) **Bearing.**

(57) A bearing has a relatively rigid shell (1) having grooves (2) in its internal wall. A lining (4) of elastomeric material on the wall has a circumferentially continuous exposed surface of which portions (3) provide bearing lands (5) and of which other portions (6) within the grooves (2) provide flutes (7). A method of producing the bearing is also described.

Fig.1.

EP 0 152 205 A2

0152205

# BEARING.

This invention relates to bearings of the general kind having a relatively rigid generally annular outer shell with an internal lining of elastomeric material providing a bearing surface, and includes a method of making such a bearing. Bearings of this general kind are particularly useful as water lubricated bearings, primarily useful in supporting marine propeller shafts and the shafts of pumps and turbines for example.

Generally, in such bearings, the internal bearing surface is in the form of longitudinal strips spaced from each other circumferentially by longitudinal grooves, the strips and grooves being formed, in one conventional type, during moulding of the elastomeric lining onto the plain cylindrical internal shell wall. Such bearings have been found to be generally satisfactory, but can lack the required stiffness in some circumstances.

In another conventional type, the strips are separate lining pieces which are either retained in grooves formed in the internal shell wall, or mounted on rigid backing strips attached by screws or similar means to the internal shell wall, either within grooves in the wall or to a plain cylindrical wall surface. This arrangement can provide additional bearing stiffness but is complicated and expensive to produce.

An object of the present invention is to provide a bearing of the aforesaid general kind, and a method of making it, which bearing is of adequate stiffness in use and of simple construction as compared with some conventional bearings, and which can be manufactured relatively inexpensively.

According to one aspect of the invention, a bearing comprises a relatively rigid generally annular outer shell having grooving in its internal wall, and a lining of elastomeric material on said wall having a circumferentially continuous exposed surface of which at least one portion not within said grooving provides a bearing land and of which at least one other portion provides a flute within said grooving.

Typically, the grooving comprises a plurality of longitudinal grooves within each of which the lining forms a flute and between pairs of which a plurality of respective bearing lands are formed.

According to another aspect of the invention, there is provided a method of making a bearing having a relatively rigid generally annular outer shell with grooving in its internal wall and with an internal lining of elastomeric material of which the circumferentially continuous exposed surface has at least one portion not within said grooving and forming a bearing land and at least one other portion providing a flute within the grooving, said method comprising moulding said lining over the internal wall of said shell.

In one convenient form of the method a mandrel is inserted within the shell such as to form a circumferentially continuous space between the mandrel and shell, and lining material is injected into said space to form said lining.

The invention will now be described, by way of example, with reference to the accompanying drawings in which:-

Figure 1 is a perspective view of one form of the bearing of the invention, and

Figure 2 is a cross-section taken along the line 2-2 of Figure 1.

The bearing illustrated in the drawings has a relatively rigid annular outer shell 1, as of brass for example, of which the internal wall is provided with a plurality of longitudinal grooves 2 separated by plain part-cylindrical portions 3.

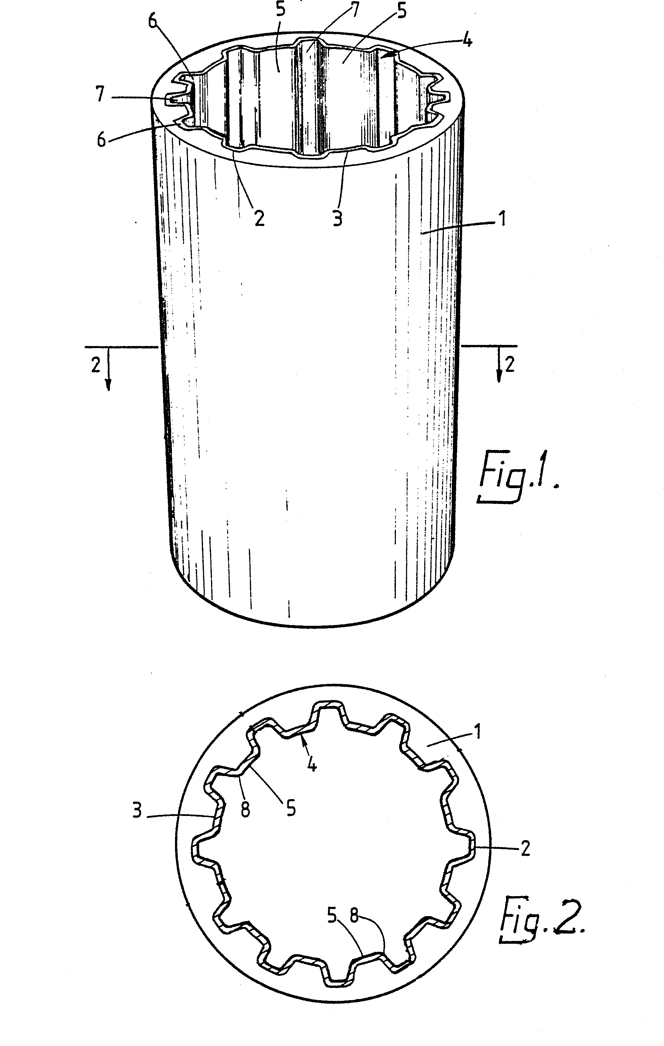

A circumferentially continuous lining 4 of elastomeric material is provided over the internal wall of the shell, such lining being of an appropriate mouldable natural or synthetic rubber or plastics composition having the necessary wear and strength characteristics, as will be well understood by those versed in the art. The lining portions lying on portions 3 form lands 5 which provide support surfaces for a shaft or the like rotatable in the bearing. The lining portions 6 lying within the grooves 2 form flutes 7 which act as flushing grooves when the bearing is water-lubricated, in use. The lining shown is of substantially constant thickness being typically between 3/32" to 5/16" depending upon the diameter of the bearing and the stiffness required. It would, however, be possible to vary this according to requirements in order, for example, to alter the thickness of the lands 5 relative to the depth of the flutes 7. It is desirable for the corners 8 of the lands to be slightly rounded, as shown in Figure 2, since this facilitates the production of a hydrodynamic film at the interface between the lining and a shaft when mounted for rotation within the bearing.

The lining 4 in the bearing illustrated may be produced by a simple injection moulding process. The required number of grooves 2 are formed in the internal wall of the shell 1 by a milling or broaching operation for example, and a correspondingly splined mandrel of appropriate diameter is then inserted within the shell with the splines lying within the grooves 2. The diameter of the mandrel and the depth of its splines are chosen so that the spacing between the external surface of the mandrel and the internal surface of the shell is equal to the required lining thickness which, in the bearing illustrated, is of uniform thickness over its entire extent. The lining is produced by injection moulding of the lining material within said space and may be subjected to a final grinding operation to ensure that the bearing lands 5 are of precise part-circular form for engagement with a shaft.

It will be understood that the number of bearing strips and other factors, such as lining and shell thickness and composition, may be varied in accordance with the service requirements of the bearing. Moreover, the grooves and bearing strips may vary in configuration, extending, for example, longitudinally of the shell or arranged spirally. In the latter case, the grooves and strips may form a single start or a multi-start arrangement.

CLAIMS.

1.    A bearing comprising a relatively rigid generally annular outer shell having grooving in its internal wall, and a lining of elastomeric material on said wall having a circumferentially continuous exposed surface of which at least one portion not within said grooving provides a bearing land and of which at least one other portion provides a flute within said grooving.

2.    A bearing according to Claim 1 wherein the grooving comprises a plurality of longitudinal grooves within each of which the lining forms a flute and between pairs of which a plurality of respective bearing lands are formed.

3.    A bearing according to Claim 1 wherein the grooving is formed as a spiral configuration.

4.    A bearing according to any one of the preceding claims wherein the lining is of substantially uniform thickness over its entire extent.

5.    A bearing according to any one of the preceding claims wherein the corners of the lands are rounded.

6.    A bearing according to any one of the preceding claims wherein the lining is of moulded synthetic rubber or plastics material.

7.    A bearing substantially as hereinbefore described with reference to the accompanying drawings.

8.    A method of making a bearing according to any one of the preceding claims having a relatively rigid generally annular outer shell with grooving in its internal wall and with an internal lining of elastomeric material of which the circumferentially continuous exposed surface has at least one portion not within said grooving and forming a bearing land and at least one other portion providing a flute within the grooving, said method comprising moulding said lining over the internal wall of said shell.

9. A method according to Claim 8 wherein a mandrel is inserted within the shell such as to form a circumferentially continuous space between the mandrel and shell, and lining material is injected into the space to form said lining.

10. A method according to Claim 8 or Claim 9 wherein said grooving is formed by milling or broaching.

11. A method according to Claim 9 or Claim 10 wherein the mandrel employed is splined in a manner corresponding to the grooving of the shell and is inserted into the shell with the splines lying within respective grooves of said grooving.

12. A method according to any one of Claims 8 to 11 wherein the radially inwardly facing bearing surfaces of the lands are ground to precise part-circular form.

13. A method of making a bearing substantially as hereinbefore described.

0152205

1/1

Fig.1.

Fig.2.